Europäisches Patentamt

European Patent Office

Office européen des brevets

(11) Publication number: **0 094 568**
A2

# (12) EUROPEAN PATENT APPLICATION

(21) Application number: 83104442.5

(22) Date of filing: 05.05.83

(51) Int. Cl.³: **B 60 R 25/02**

(30) Priority: 14.05.82 JP 80163/82
14.05.82 JP 80164/82

(43) Date of publication of application:
23.11.83 Bulletin 83/47

(84) Designated Contracting States:
DE FR GB

(71) Applicant: NISSAN MOTOR COMPANY, LIMITED
No.2, Takara-cho, Kanagawa-ku
Yokohama City(JP)

(71) Applicant: KOKUSAN KINZOKU KOGYO KABUSHIKI
KAISHA
2-8-2, Kamata
Ota-ku Tokyo(JP)

(72) Inventor: Mochida, Haruo
No. 1104-4, Susugaya Kiyokawa-mura
Aiko-gun Kanagawa Prefecture(JP)

(72) Inventor: Masaki, Mikio
c/o Kokusan Kogyo K.K. No. 2-8-2, Kamata
Ota-ku Tokyo(JP)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) A key cylinder unit of a steering lock device.

(57) A sectoral stop member (60) is integrally mounted to a rotor unit which comprises a key cylinder (54) and a cam portion (56) which are coaxially alinged. A housing (44) for the rotor unit is coaxially disposed in a cylindrical bore (49) of the frame member (48) in a such maner that a given space (ℓ) is defined between an axial inboard end (66) of the housing and a circular flat portion (70a) formed in the bore of the frame member. An arcuate projection (64) is formed on the axial inboard end of the housing so that a given space extends about the axis of the bore of the housing from a first stop portion (68) to a second stop portion. The rotor unit is coaxially and rotatably received in the bore of the housing in such a manner that the sectoral stop member is received in the given clearance.

FIG.2

EP1034

PATENTANWÄLTE
GRÜNECKER · DR. KINKELDEY · DR. STOCKMAIR
DR. SCHUMANN · JAKOB · DR. BEZOLD · MEISTER
HILGERS · DR. MEYER · PLATH

# A KEY CYLINDER UNIT OF A STEERING LOCK DEVICE

## BACKGROUND OF THE INVENTION

The present invention relates to a steering lock device of a steerable vehicle which device can lock the steering shaft of the vehicle when an ignition key in a key cylinder unit is turned to a certain position, viz., the "LOCK" position, and more particularly to the key cylinder unit of the device.

## SUMMARY OF THE INVENTION

According to the present invention, there is provided an improved key cylinder unit of a steering lock device, which can be assembled easily and produced at low cost.

According to the present invention, there is provided, in a steering lock device of a steerable vehicle having a locking unit which locks the steering shaft of the vehicle when assuming a given position, a key cylinder unit which comprises a frame member fixed to a stationary rigid member of the vehicle and containing therein the locking unit, the frame member having therein a cylindrical bore, a housing having therethrough a cylindrical bore, the housing being coaxially and partially disposed in the cylindrical bore of the frame member in such a manner that an axial inboard end of the housing abuts on a circular flat portion formed in the bore of the frame member, the housing being secured to the frame member by means of a removable fixing means, means for defining between the axial inboard end of the housing and the circular flat portion of the frame member a given clearance which extends about the axis of the bore of the housing from a first stop portion to a second stop portion, a rotor unit consisting of a key cylinder and a cam portion which are coaxially aligned, the rotor unit being coaxially and rotatably received in the bore of the housing, having the cam portion thereof operatively engaged with the locking unit, and a projection member securely mounted to the rotor unit and having a major portion which is movably received in the given clearance, whereby the rotational movement of the rotor unit about the axis thereof relative to the housing is limited by the engagement of the projection member with either one of the first and second stop portions, and the axial displacement of the rotor unit relative to the housing is suppressed by the engagement of the projection member with either one of the portions which bound the axial opposed ends of the given clearance.

BRIEF DESCRIPTION OF THE DRAWINGS

Other objects and advantages of the present invention will become clear from the following description when taken in conjunction with the accompanying drawings, in which:

Fig. 1 is an exploded view of a conventional key cylinder unit which is employed in a steering lock device;

Fig. 2 is an exploded view of an improved key cylinder unit employed in a steering lock device, according to the present invention;

Fig. 3 is a sectional view of the steering lock device in which the improved key cylinder unit of the present invention is mounted;

Fig. 4 is an exploded view of a locking unit mounted in the steering lock device of Fig. 3; and

Fig. 5 is a partial side view showing the positional relationship between the key cylinder unit and the locking unit.

DETAILED DESCRIPTION OF THE INVENTION

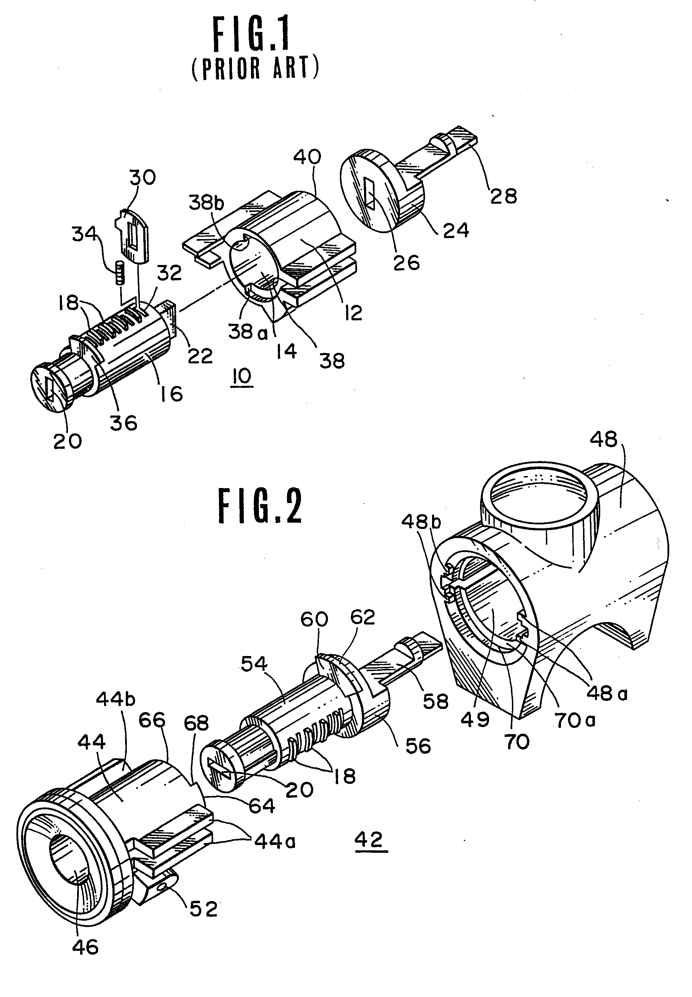

Prior to describing the invention, a conventional key cylinder unit of the commonly used steering lock device will be outlined with reference to Fig. 1 in order to clarify the invention.

Referring to Fig. 1, there is shown the conventional key cylinder unit 10. The unit 10 comprises a housing 12 having a cylindrical bore 14 therein. The housing 12 is secured to a suitable rigid member of a vehicle body (not shown). A key cylinder 16 is disposed in the bore 14 of the housing 12 so that the cylinder 16 is rotatable about its axis relative to the housing 12. The key cylinder 16 is provided along the axis thereof with projectable tumblers 18, and has a key hole 20 into which a certain key (not shown) is inserted for moving the tumblers 18 into their hidden positions. The key cylinder 16 is further provided at the axially other end thereof with a rectangular projection 22 which is projected outward from the housing 12. The projection 22 is engaged with or inserted into a rectangular recess 26 of a semicircular cam member 24 so that the key cylinder 16 and the cam member 24 are rotatable together relative to the housing 12. The cam member 24 has an axially extending rod portion 28 by which a known ignition switch circuit (not shown) is controlled.

In the illustrated conventional key cylinder unit 10, the following measure is employed for holding the key cylinder 16 in the housing 12. A stopper tumbler 30 is received in the key cylinder 16 at the portion close to the rectangular projection 22 in a manner to be partially projectable from a slit 32 of the key cylinder 16. To bias the stopper tumbler 30 to be projectable, a coil spring 34 is received in the key cylinder 16. A sectoral stopper member 36 is integrally mounted to the key cylinder 16 at a portion axially remote from the rectangular projection 22. The mouth portion of the housing 12 is formed with a semicircular groove 38 which is merged with the bore 14 of the housing 12 and has opposed stop ends 38a and 38b. Upon assemblage, the key cylinder 16 is inserted into the housing 12 from this side, and in a finally assembled condition, the partially projected stopper tumbler 30 is in slidable engagement at its one side with the rear edge portion 40 of the housing 12, and the sectoral stopper member 36 is intimately but slidably received in the semicircular groove 38 of the housing 12, so that the axial displacement of the key cylinder 16 relative to the housing 12 is suppressed. The rotating movement of the key cylinder 16 about the axis thereof relative to the housing 40 is limited by engagement of the stopper member 36 with either one of the stop ends 38a and 38b of the housing 40.

However, the key cylinder unit 10 having the above-stated construction requires a troublesome assembling process due to its inherent construction. In fact, the insertion of the key cylinder 16 into the housing from this side 12 has to be made with the stopper tumbler 30 being pressed by an operator's finger or fingers. Furthermore, using the stopper tumbler 30 and the spring 34 causes increase in production cost of the key cylinder unit.

Therefore, it is an essential object of the present invention to provide an improved key cylinder unit which is free of the above-mentioned drawbacks.

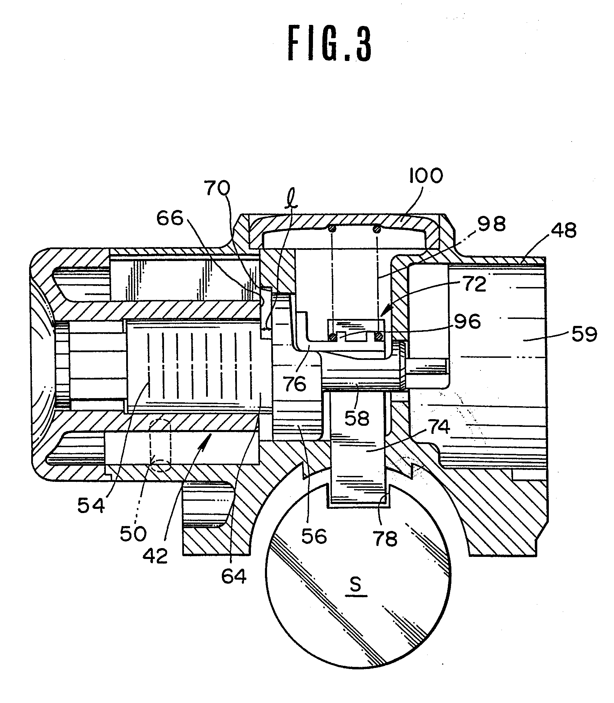

Referring to Figs. 2 and 3, especially Fig. 2, there is shown a key cylinder unit 42 according to the present invention. The unit 42 comprises a housing 44 having a cylindrical bore 46. The housing 44 is tightly set in a cylindrical bore 49 of a frame member 48 and secured to the same by a bolt 50 (see Fig. 3). The housing 44 has thus a bolt hole 52. The detailed construction of the frame member 48 will be hereinafter clarified at the part in which a locking unit associated with the key cylinder unit 42 is described. A key cylinder 54 of this invention is integrally formed with a coaxially arranged semicircular cam portion 56 thereby to form a rotor unit (54 + 56). By the same reason as mentioned hereinabove, the cam portion 56 has an axially extending rod portion 58 by which a known ignition switch circuit 59 (see Fig. 3) is controlled. As shown, the diameter of the cam portion 56 is greater than that of the key cylinder 54.

In this invention, the following measure is employed for holding the rotor unit (which consists of the key cylinder 54 and the cam portion 56) in the housing 44. A sectoral stopper member 60 is integrally connected

-7-

to the key cylinder 54 at a portion at which said cam portion 56 is joined. As shown, the sectoral stopper member 60 extends radially outwardly from the key cylinder 54 and has an arc peripheral portion 62 which is concentric with the key cylinder 54. The rear end of the housing 44 is stepped, leaving there a small arcuate projection 64 and a non-projected major portion 66. Two shoulder portions 68 (only one is shown in the drawing) are thus formed between these portions 64 and 66, as shown. The mouth portion of the frame member 48 is formed with a coaxial circular recess 70 which is merged with the bore 49 of the frame member 48. A circular flat base portion 70a is thus defined in the frame member 48. As shown, the housing 44 and the frame member 48 have respectively guide ridges 44a and 44b and guide projections 48a and 48b, these ridges and guide projections being mated with each other to promote coupling herebetween. As will be understood from Fig. 3, in the finally assembled condition, the leading end of the small arcuate projection 64 of the housing 44 is in contact with the circular flat base portion 70a of the frame member 48, leaving a predetermined clearance $\ell$ between the non-projected major portion 66 of the housing 44 and the circular flat base portion 70a of the frame member 48. The sectoral stopper member 60 integral with the key cylinder

- 8 -

54 is received in the clearance $\ell$ in a manner to be movable about the axis of the cylindrical bore 46 of the housing 44. Thus, the shoulder portion 68 of the housing 44 is determined slightly greater than the thickness of the sectoral stopper member 60. At the final step of this assemblage, the bolt 50 is applied for securing the housing 44 to the frame member 48.

With this construction, it will be appreciated that the one piece unit consisting of the key cylinder 54, the cam portion 56 and the stopper member 60 is rotatable about its axis relative to the housing 44 within a certain angular range determined by engagement of the sectoral stopper member 60 with the two shoulder portions 68 of the housing 44. In fact, the clockwise rotation (in Fig. 2) of the one piece unit (54 + 56) is limited by engagement of the stopper member 60 with the shown shoulder portion 68, while the counterclockwise rotation of the same is limited by engagement of the stopper member 60 with the not-shown shoulder portion (68). Besides, it will be appreciated that axial displacement of the one piece unit (54 + 56) relative to the housing 44 is substantially suppressed by engagement of the sectoral stopper member 60 with either one of the non-projected major portion 66 of the housing 44 and the circular flat base portion 70a of the frame member 48. Furthermore, it will be appreciated that the assembling process of the key cylinder unit 42 is very simplified as compared with the afore-mentioned conventional unit 10. In fact, in the invention, the troublesome tumbler pressing work which would be required in the conventional unit 10 is unnecessary.

The locking unit 42 associated with the above-mentioned key cylinder unit 42 will be described hereinnext with reference to Figs. 3, 4 and 5. The locking unit 42 functions to lock a steering shaft S (see Fig. 3) when the key cylinder 54 is rotated to a given position (that is "LOCK" position).

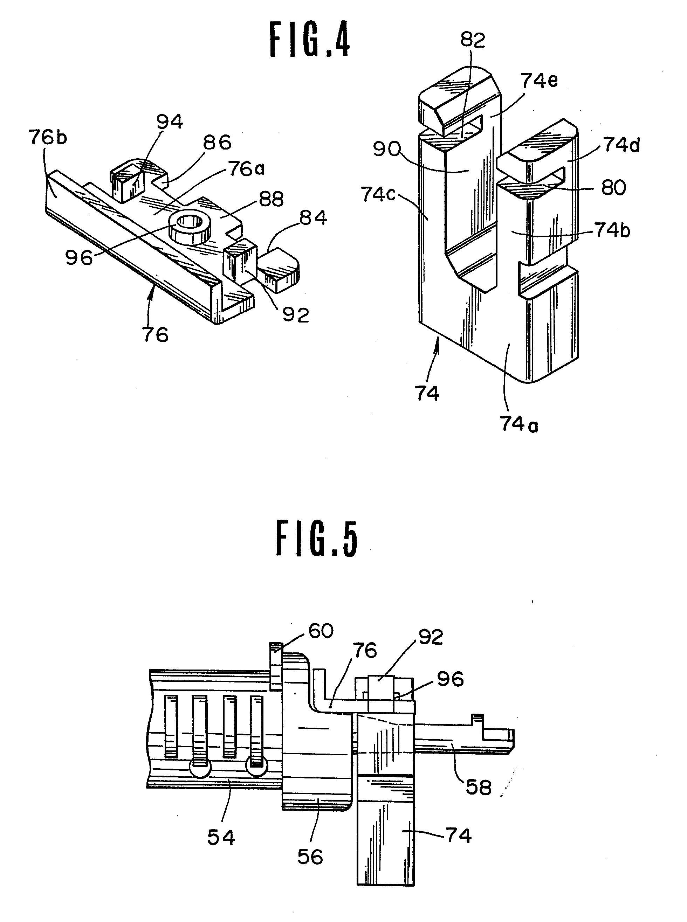

The locking unit 42 comprises a locking rod 74 and a hanger plate 76 which are combined with each other and housed in the frame member 48 to be engageable with the afore-mentioned semicircular cam portion 56. As is clearly shown in Fig. 4, the locking rod 74 has a generally U-shaped construction and has a rectangular base portion 74a which is insertable into a rectangular locking hole 78 (see Fig. 3) formed in the steering shaft S for achieving locking of the shaft S. The locking rod 74 is formed at its two column portions 74b and 74c with aligned recesses 80 and 82. The hanger plate 76 has a generally L-shaped cross section, comprising generally a major portion 76a and a rectangular flange portion 76b which is normal to the major portion 76a. The thickness of the major portion 76a is substantially equal to or slightly less than that of each recess 80 or 82 of the locking rod 74. The major portion 76a of the hanger plate 76 is formed at its leading end with two recesses 84 and 86 which are spaced by a rectangular projection 88 of the major portion 76a. The width of this projection 88 is substantially equal to that of the clearance 90 which is defined between the two column portions 74b and 74c, and the width of each recess 84 or 86 is substantially equal to the thickness of the corresponding column portion 74b or 74c of the locking rod 74. It is to be noted that by the afore-mentioned dimentional relationship between the locking rod 74 and the hanger plate 76, the connection between them is tightly achieved without play therebetween.

As will be understood from Fig. 3, the locking rod 74 and the hanger plate 76 which are thus combined are mounted in the frame member 48 in such a manner that the lower surface of the hanger plate 76 rides on the semicircular cam portion 56 and that the axially extending rod portion 58 of the cam portion 56 passes through the clearance 90 of the locking rod 74 and leads to the ignition circuit device 59. With this, it will be appreciated that in response to the rotational movement of the key cylinder 54 (which is integral with the cam portion 56), the combined unit consisting of the hanger plate 76 and the locking rod 74 moves up and down, that is the direction to unlock the steering shaft S or to lock the same. In order to bias the unit downward, that is, toward the rectangular locking hole 78 of the steering shaft S, a coil spring 98 is compressed between the hanger plate 76 and a lid member 100 of the frame member 48.

With this arrangement, when the key cylinder 54 is rotated to the "LOCK" position, that is the position as shown in Fig. 3, the locking rod 74 is engaged with or inserted into the locking hole 78 of the steering shaft S thus locking the shaft S, while, when the key cylinder 54 is rotated to positions other than the "LOCK" position, the locking rod 74 is disengaged from the locking hole 78 of the steering shaft S thereby releasing the shaft S.

WHAT IS CLAIMED IS:

1. In a steering lock device of a steerable vehicle having a locking unit (74 + 76) which locks the steering shaft (S) of the vehicle when assuming a given position,

a key cylinder unit (42) comprising:

a frame member (48) fixed to a stationary rigid member of the vehicle and containing therein said locking unit, said frame member having therein a cylindrical bore (49);

a housing (44) having therethrough a cylindrical bore (46), said housing being coaxially and partially disposed in the cylindrical bore of said frame member in such a manner that an axial inboard end of said housing abuts on a circular flat portion (70a) formed in the bore of said frame member;

means for defining between said axial inboard end of said housing and said circular flat portion of said frame member a given clearance ($\ell$) which extends about the axis of the bore of said housing from a first stop portion (68) to a second stop portion (68);

a rotor unit (54 + 56) consisting of a key cylinder (54) and a cam portion (56) which are coaxially aligned, said rotor unit being coaxially and rotatably received in the bore of said housing, having the cam portion (56) thereof operatively engaged with said locking unit (74 + 76); and

a projection member (60) securely mounted to said rotor unit and having a major portion which is movably received in said given clearance,

whereby the rotational movement of said rotor unit about the axis thereof relative to said housing is limited by the engagement of said projection member with either one of said first and second stop portions, and the axial displacement of said rotor unit relative to said housing is suppressed by the engagement of said projection member with either one of the portions which bound the axial opposed ends of said given clearance.

2.  A key cylinder unit as claimed in Claim 1, in which said projection member is integral with said rotor unit.

3.  A key cylinder unit as claimed in Claim 2, in which said means comprises an arcuate projection (64) which is formed on said axial inboard end of said housing in a manner to be coaxial with the bore of said housing, the axially leading end of said arcuate projection abutting on said circular flat portion (70a) of said frame member.

4.    A key cylinder unit as claimed in Claim 3, in which said first and second stop portions are lateral edges of said arcuate projection, respectively.

5.    A key cylinder unit as claimed in Claim 3, in which said circular flat portion of said frame member is a circular flat base portion (70a) of a circular recess (70) concentrically formed in the mouth portion of the cylindrical bore of said frame member.

6.    A key cylinder unit as claimed in Claim 5, in which said projection member (60) is a sectoral member which is arranged at a position where the key cylinder proper and the cam portion proper are connected.

7.    A key cylinder unit as claimed in Claim 6, in which said key cylinder proper and said cam portion are integrally connected with each other.

8.    A key cylinder unit as claimed in Claim 1, in which said housing is secured to said frame member by means of a removable fixing means (50).

9.    A key cylinder unit as claimed in Claim 1, in which said locking unit comprises:

a generally U-shaped locking rod (74) including a rectangular base portion (74a), and spaced two column portions (74b, 74c) extending from said base portion in the same direction, said rectangular base portion being insertable into a rectangular hole (78) of said steering shaft to lock the same, said column portions being formed with aligned receses (80, 82);

a hanger plate (76) having a generally L-shaped cross section and including a major portion (76a) and a rectangular flange portion (76b) which is normal to said major portion (76a), said hanger plate being attached to said locking rod in such a manner that said major portion is received in said alinged recesses, said hanger plate thus connected to said locking rod being slidably put on said cam portion of said rotor unit; and

means for assuring a tight connection between said locking rod and said hanger plate.

10. A key cylinder unit as claimed in Claim 9, in which said means comprises:

two recesses (84, 86) formed in the leading end of said major portion in a manner to be spaced from each other by a rectangular projection (88) of said major portion, the width of said projection being substantially equal to that of a clearance (90) defined between said column portions (74b, 74c), and the width of each of said recesses being substantially equal to the thickness of the corresponding column portion of the locking rod; and

two rectangular raised portions (92, 94) formed on the lateral sides of said major portion, each being normal to said major portion, the distance between the mutually facing surfaces of the raised portions being substantially equal to the distance between the outer surfaces of the respective column portions of the locking rod,

wherein, upon assemblage, the two recesses of said major portion are snugly engaged with the width-reduced portions (74d, 74e) of the locking rod at which said aligned recesses are positioned, and the rectangular raised portions are snugly engaged with the outer surfaces of the column portions.

# FIG.1
## (PRIOR ART)

# FIG.2

# FIG.3

0094568

# FIG.4

# FIG.5